# EUROPÄISCHE PATENTSCHRIFT

(11) **EP 3 998 144 B1**
(45) Veröffentlichungstag und Bekanntmachung des Hinweises auf die Patenterteilung: **20.03.2024**
(21) Anmeldenummer: 21202860.9
(22) Anmeldetag: 15.10.2021
(51) Int. Cl.: B29B 17/02, B29B 17/04

(54) **VERFAHREN UND VORRICHTUNG ZUR AUFBEREITUNG VON GEBRAUCHTEM EXPANDIERTEM POLYSTYROL (EPS) MATERIAL**
METHOD AND DEVICE FOR PROCESSING USED EXPANDED POLYSTYRENE (EPS) MATERIAL
PROCÉDÉ ET DISPOSITIF DE PRÉPARATION DE LA MATIÈRE DE POLYSTYRÈNE EXPANSÉ (EPS) UTILISÉ

(30) Priorität: 16.10.2020 DE 102020127399
(43) Veröffentlichungstag der Anmeldung: 18.05.2022
(73) Patentinhaber: WKI Isoliertechnik GmbH, 13088 Berlin (DE)
(72) Erfinder: Breitenbach, Jürgen, 36266 Heringen (DE)
(74) Vertreter: Ziebig Hengelhaupt Intellectual Property Attorneys Patentanwaltskanzlei PartGmbB

(56) Entgegenhaltungen:
- DE-A1- 10 105 995
- DE-U1-202016 106 083
- KR-Y1- 200 397 468

## Beschreibung

Die Erfindung betrifft ein Verfahren und eine Vorrichtung zur Aufbereitung von gebrauchtem EPS Material und ist anwendbar zur Rückführung von sogenannten Rückschnitten aus EPS in den perligen und zelligen Zustand.

Styropor^{®}/ Neopor^{®} ist gemäß der Nomenklatur eine Bezeichnung der BASF AG für expandierbares Polystyrol (EPS).

Gebrauchtes EPS hat den Mangel, dass es mit Anhaftungen wie Klebern, Putzen und sonstigen Verunreinigungen versehen ist. Die Rückführung von gebrauchtem EPS in den Wirtschaftskreislauf setzt voraus, dass der perlige und zellige Zustand des EPS erhalten bleibt. EPS ist in der perligen und zelligen Struktur sehr elastisch und sehr leicht mit einer etwa Dichte von ca. 10 bis 30 kg / m³. Im Vergleich zu den mineralischen Anhaftungen wie Kleber und Putze liegen diese bei 1700 bis 2000 kg/ m³. Die mineralischen Bestandteile sind auf Grund ihrer Struktur nicht so elastisch. Hier setzt die vorliegende Erfindung mit einer physikalischen Überlegung an, elastische Stoffe von weniger elastischen Stoffen zu trennen.

Aus dem Stand der Technik ist kein Verfahren oder System bekannt, das diese Aufgabe erfüllen kann.

Die DE 10105995 A1 beschreibt ein Sammelverfahren und eine Sammelvorrichtung zum Sammeln von Schaumgas aus geschäumten Wärmeisoliermaterial, das in Entsorgungsmaterial, wie z.B. in Kühlvorrichtungen etc. enthalten ist. Das Entsorgungsmaterial wird in Zerkleinerungsmaschinen zerkleinert. Die zerkleinerten Teile enthalten zerkleinerte geschäumte Wärmeisoliermaterialien, Kunststoffstücke, Metallstücke 7 etc. Die zerkleinerten Teile werden mittels einer Windkraftabscheidungsvorrichtung getrennt.

Aus der CN 111438837 A ist ein Verfahren zur regenerativen Granulierung von EPS-Kaltpressmaterialien bekannt, welches die Verarbeitungsprozesse des Zerkleinerns und Förderns der abfallenden EPS-kaltgepressten Materialien umfasst. Die DE 19714793 C1 offenbart eine Vorrichtung und ein Verfahren zum naßmechanischen Trennen eines Feststoffgemisches, insbesondere von Kunststoffen unterschiedlicher Dichte.

Die DE 20 2016 106 083 U1 offenbart eine Anlage zur Aufbereitung von mit HBCDD (Hexabromcyclododecan) belasteten EPS (Styropor) Abfällen - mit wenigstens einer Zerkleinerungseinrichtung zur Zerkleinerung der Abfälle, insbesondere einem Querstromzerspaner, wobei der Zerkleinerungseinrichtung die aufzubereitenden Abfälle zuführbar sind, die Zerkleinerungsvorrichtung wenigstens eine Austragsöffnung aufweist, durch welche die zerkleinerten Abfälle austragbar sind, - mit wenigstens einer ersten, sich an die Austragsöffnung anschließenden Absaugung zur Absaugung der zerkleinerten Abfälle und des während der Zerkleinerung freigesetzten Prozessgases, - mit wenigstens einem sich an die erste Absaugung anschließenden Zyklon zur Trennung von einer Schwerfraktion und einer Leichtfraktion der zerkleinerten abgesaugten Abfälle, - mit wenigstens einer sich an einen Zyklon anschließende Endabsaugung für das bei der Zerkleinerung freigesetzte Prozessgas, - mit wenigstens einer Abgasbehandlungsanlage zur Reinigung des Prozessgases von Hexabromcyclododecan (HBCDD) und/oder Bioziden und/oder Fungiziden.

Der Erfindung liegt daher die Aufgabe zugrunde, ein Verfahren und eine Vorrichtung zu schaffen, mit denen gebrauchtes EPS einfach und preiswert aufgearbeitet und in den Wirtschaftskreislauf zurückgeführt werden kann.

Diese Aufgabe wird gelöst durch die Merkmale in den Ansprüchen 1 und 6. Zweckmäßige Ausgestaltungen der Erfindung sind in den Unteransprüchen enthalten.

Ein besonderer Vorteil der Erfindung besteht in der umweltverträglichen mechanischen Aufbereitung des gebrauchten EPS Materials durch die Realisierung der Verfahrensschritte
- Verformung der elastischen Partikel aus Expandierbarem Polystyrol in einer Dekontaminierungsanlage derart, dass die Anhaftungen aus Klebern und/oder Putzen und/oder PU Schäumen und/oder festen Farben abplatzen, wobei die perlige und zellige Struktur des Expandierbarem Polystyrol erhalten bleibt,
- Trennung des aus Anhaftungen und Partikeln aus Expandierbarem Polystyrol bestehenden Stoffgemisches durch Dichtetrennung in einer Trenneinrichtung, ), wobei die Dichtetrennung durch mittels einer rotierenden Schleuderscheibe erzeugte Zentrifugalkraft erfolgt.

Ein zusätzlicher Vorteil der Erfindung resultiert daraus, dass die Verformung der elastischen EPS Partikel durch Stauchung und/oder Pressung der EPS Partikel realisiert wird, indem die EPS Partikel mittels eines Rotors gegen die Geometrie eines Stators geschleudert werden.

Ebenfalls vorteilhaft ist, dass die von den Anhaftungen befreiten EPS Partikel oberhalb der Schleuderscheibe abgesaugt werden und die Anhaftungen in Richtung unterhalb der Schleuderscheibe absinken.

Ein wesentlicher Vorteil der Erfindung ist der robuste und effektive Aufbau der erfindungsgemäßen Vorrichtung zur Aufbereitung des gebrauchten EPS Materials, wobei die Vorrichtung geeignet ist zur Durchführung des Verfahrens nach Anspruch 1 und welche dadurch gekennzeichnet ist, dass eine Dekontaminierungsanlage mit einer Trenneinrichtung verbunden ist, wobei die Dekontaminierungsanlage einen Rotor mit einem Antrieb und einen Stator mit Gehäuse und mit einer Geometrie aufweist, gegen welche die Partikel aus Expandierbarem Polystyrol geschleudert werden und die Trenneinrichtung eine in einem Gehäuse angeordnete Schleuderscheibe umfasst, oberhalb derer eine Zuführung für das EPS Material mit Anhaftungen und eine Abführung für das von den Anhaftungen befreite EPS Material angeordnet ist und zwischen der Innenwandung des Gehäuses und der Schleuderscheibe Öffnungen angeordnet sind, durch welche die Anhaftungen absinken.

Unterhalb der Schleuderscheibe ist zweckmäßigerweise eine Zuführung für atmosphärische Zuluft angeordnet.

Der Rotor weist Rotorscheiben auf, an denen Schlegel angeordnet sind, und die Geometrie hat bogenförmige Vertiefungen mit nach innen gerichteten schiefen Ebenen.

Die Erfindung soll nachstehend an Hand von zumindest teilweise in den Figuren dargestellten Ausführungsbeispielen näher erläutert werden. Es zeigen:
- Fig.1: ein Fließschaltbild zur Darstellung des Ablaufes der Aufbereitung,
- Fig.2: eine Detailansicht der erfindungsgemäßen Dekontaminierungsanlage,
- Fig.2a: Rotorbesatz in V-Form,
- Fig.2b: Rotorbesatz in VV-Form,

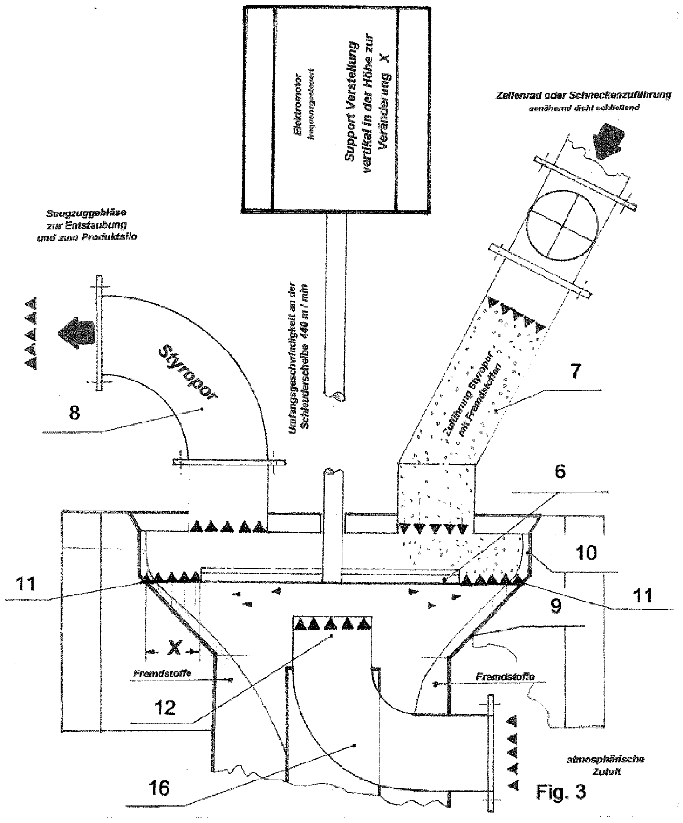

- Fig.3: eine Detailansicht der erfindungsgemäßen Trenneinrichtung.

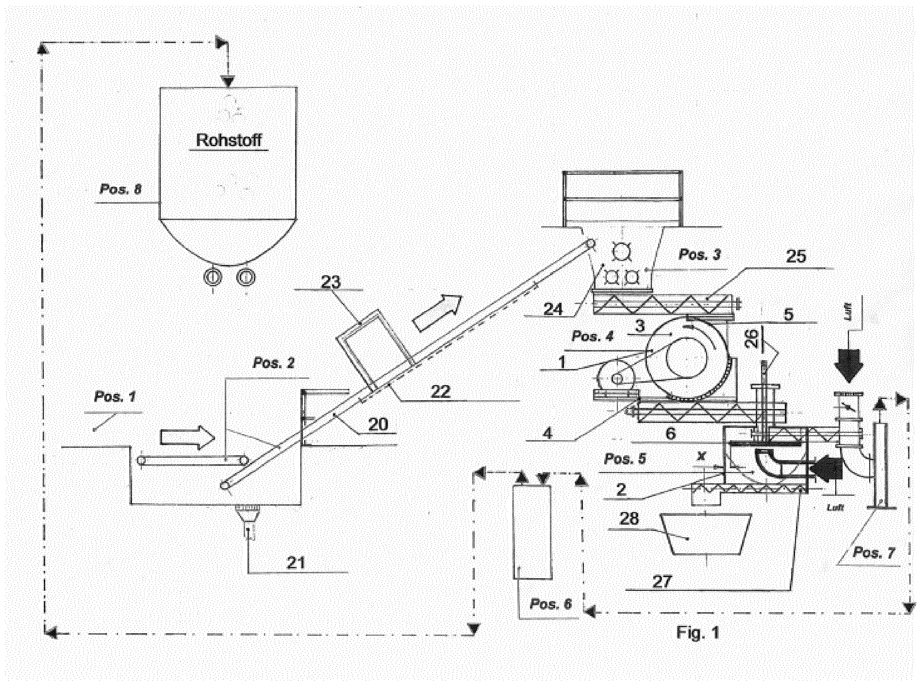

Wie in Fig. 1 dargestellt, ist das Grundprinzip der Aufbereitung von gebrauchtem EPS ein Rotationverfahren in mehrstufiger Weise. Hierbei werden die unterschiedlichen Geschwindigkeiten erzeugt, die eine Zerkleinerung und Dekontaminierung nur möglich machen.

Der Ablauf wird nachfolgend an den einzelnen Positionen erläutert.

EPS in Form von so genanntem Rückschnitt wird im Herstellerwerk gelagert und zeitnah aufbereitet.

Position 1: Eine Bandanlage 20 übernimmt das Produkt, das im vorliegenden Ausführungsbeispiel von Hand durch einen Mitarbeiter aufgegeben wird.

Unterhalb der Bandanlage 20 ist eine Entwässerung 21 und ein Unterbandschutz 22 angeordnet.

Position 2: Über eine Metallsuchbrücke 23 gelangt das Material in einen Vorbrecher 24.

Position 3: In dem Vorbrecher 24 erfolgt eine Vorzerkleinerung des Materials. Die dem EPS anhaftenden Kleber und Putze als mineralische Bestandteile führen zu Verschleiß der Bestandteile des Vorbrechers 24.

Position 4: Dekontaminierungsanlage:
Die erfindungsgemäße Dekontaminierungsanlage 1 ist neben der Trennanlage 2 das Herzstück der Vorrichtung. Hier werden die elastischen, perligen EPS Teilchen von den mineralischen Anhaftungen getrennt. Dabei verliert auch die Zellstruktur diese Anhaftungen. Die Trennung läuft physikalisch und ohne Zugabe von Wasser ab.

Wichtig war im Rahmen der Erfindung herauszufinden, bei welcher Geometrie, die nicht schneidend sein darf, ein möglichst gutes Ergebnis bei minimalem Verschleiß vollzogen werden kann.

Die erfindungsgemäße Dekontaminierungsanlage 1 weist einen Rotor 3 und einen Stator 4 mit Gehäuse auf, wobei der Rotor 3 mit einem Antrieb versehen ist. Tangential befindet sich eine Materialzuführung. Das Material wird dem Rotor 3 über die Schwerkraft zugeführt. Der Rotor 3 setzt dann das EPS so in Bewegung, dass zunächst die Zentrifugalbeschleunigung einsetzt, dann das EPS durch die Tangentialbeschleunigung so gegen die am Stator 4 verankerte und nach innen gerichtete Geometrie 5 geworfen wird, dass sich das EPS so verformt, dass alle Anhaftungen durch den Aufprall abplatzen und der Verformung nicht standhalten können. Gründe hierfür sind, dass das EPS ein sehr elastischer Stoff ist, der leicht verformbar ist. Die Anhaftungen bestehen aus mineralischen Stoffen, (Putze und Kleber) sowie PU Schäume und anderen nicht so elastischen Stoffen wie Kunststoffputze, feste Farben und anderen Stoffen.

Diese Bestandteile machen diese Bewegungen nicht mit und lösen sich auf Grund der enormen Verformung des Styropors^{®} von diesem Stoff. Es handelt sich um ein herbeigeführtes physikalisches Verfahren, das elastische Stoffe von nicht elastischen Stoffen bei Normaltemperatur durch Werkstoffspannungen trennt. Der sehr elastische Stoff EPS bleibt in der perligen und zelligen Struktur erhalten und verändert seine ursprüngliche Form bei diesem Vorgang nicht, sondern wird auf Grund dieser Dekontaminierung wieder sauber, sodass er erneut einer Verwendung als Rohstoff der Produktion zugeführt werden kann.

Nach dem Verlassen der Stoffe aus der Dekontaminierungsanlage 1 haben wir es noch zu diesem Zeitpunkt mit einem Stoffgemisch aus EPS, Putzen, Klebern usw. zu tun, sodass ein Folgeschritt eingeleitet wird. Hierbei handelt es sich um die Trenneinrichtung 2, die EPS sauber von den Putzen, Klebern, und sonstigen Stoffen trennt.

Die Bewegungsabläufe des EPS in der Dekontaminierungsanlage 1 sollen nachfolgend nochmals im Detail beschrieben werden.

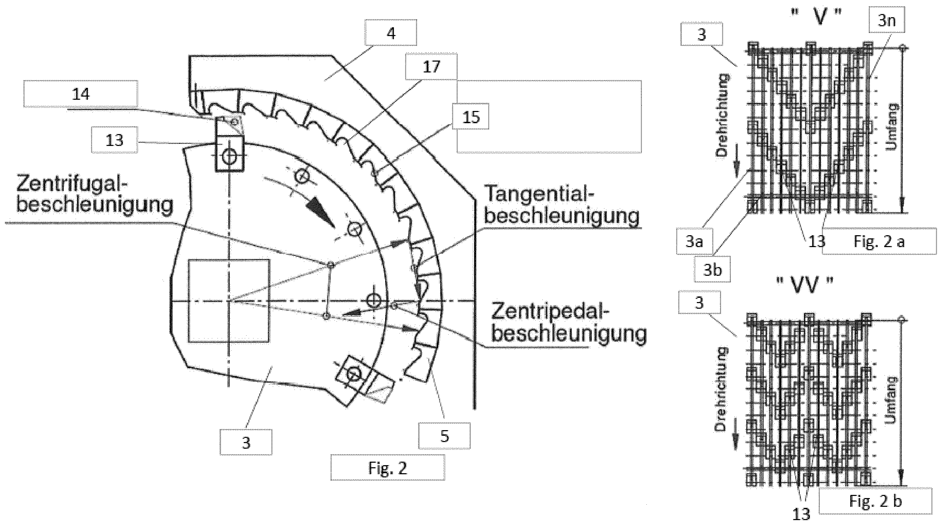

In Fig. 2 ist die Geometrie 5 für die nicht schneidende Zerkleinerung im Detail dargestellt.

Von dem Vorbrecher 24 in Position 3 gemäß Fig. 1 gelangen die vorzerkleinerten EPS Teile in der Größenordnung 0 bis 50 mm Kantenlänge mittels einer Zuführeinrichtung 25 in den tangential angeordneten Einlaufschacht der Dekontaminierungsanlage 1. Das Gehäuse der Dekontaminierungsanlage 1 ist im vorliegenden Ausführungsbeispiel eine stabile Schweißkonstruktion, die vorzugsweise aus 15 mm Blech besteht. Der Innenraum ist verschleißtechnisch mit einer 10 mm Auskleidung mit einem Antischleiß - Stahl versehen. Der Rotor 3 hat außenliegende Lagerungen und Antriebsorgane. Durch die Drehung des Rotors 3 erfährt zunächst das EPS eine Zentrifugalbeschleunigung bei einer Umfangsgeschwindigkeit von 502 m/min. Mit dieser erreicht das EPS die abgestimmte Geometrie 5 mit bogenförmigen Vertiefungen 17 und nach innen gerichteten schiefen Ebenen 15. Durch die Zentrifugalbeschleunigung mit der gemeinsam nun einsetzenden Tangentialbeschleunigung wird das EPS so heftig - und dies mehrmals - gegen die nach innen gerichteten Ebenen 15 geschleudert, dass eine sich oftmals wiederholende Verformung, Stauchung und Pressung des Styropors^{®} entsteht. Durch diese Formveränderung trennen sich die elastischen Stoffe (EPS) von den nicht elastischen Stoffen (mineralische Stoffe und sonstigen Stoffen). Diese platzen einfach ab, weil eine Haftung auf Grund unterschiedlicher Verformungskräfte und Spannungen nicht mehr möglich ist. Dabei wird nicht nur die Oberfläche der EPS Granulate gereinigt, sondern auch die offenen Zellen der Schnittflächen, die manchmal zu sehen sind. Hier zeigen sich die ausgezeichneten Effekte und die gute und dem EPS eigene Materialeignung und die hohe unverwüstliche Belastung dieses Werkstoffes.

Nach dem Auftreffen der EPS Teilchen, die eine geschlossene Oberfläche besitzen, werden diese über die Zentripedalbeschleunigung wieder an den Rotor 3 geführt und wieder dem gleichförmig rotierendem Bezugssystem zugeführt. Helfend sind hierbei Schlegel 13 (Hämmer) die keine schneidende Wirkung haben. Dieses Rotationssystem erhält den perligen und zelligen Zustand des Styropors^{®} und sichert eine Verwendung als sauber hergestelltes EPS qualitativ ab.

An Rotorscheiben 3a, 3b bis 3n, wie in den Fig. 2a und 2b dargestellt, sind die Schlegel 13 (Hämmer) angeordnet. Diese besitzen eigene Achsen, die bei hoher Belastung ausweichen können und das Spaltmaß zwischen Schlegel (Hammer) und der Geometrie 5 gewollt verändern können. Gleichzeitig zieht aber die Zentrifugalkraft diese wieder in die radiale Stellung zurück, weil die Schwerpunktlage asymmetrisch angeordnet wurde. Die Rotorscheiben 3a, 3b bis 3n sitzen auf einer Vierkantantriebswelle, wobei die Rotorscheiben 3a, 3b bis 3n aber alle noch eigene Achsen zur Aufnahme der Schlegel 13 (Hämmer) besitzen. Dabei ist es möglich, verschiedene Besatzmöglichkeiten der Schlegel 13 (Hämmer) an den Rotorscheiben 3a, 3b bis 3n vorzunehmen. Die Möglichkeiten bestehen im vorliegenden Ausführungsbeispiel aus einer Mindestanzahl von drei Schlegeln 13 bis zu zwölf Schlegeln 13 (Hämmer) als Maximalbesatz.

Da nicht alle mineralischen- und Kunststoffverbindungen, das sind Kleber, Putze, Anstriche usw. gleiche Eigenschaften haben, ist der Rotor 3 so konstruiert, dass ein großer verfahrenstechnischer Spielraum in der Rotorbestückung und dem Rotorbesatz besteht. In der Darstellung ist dies einmal in einem "V" (Fig. 2a) und einmal in einem Doppel "VV" (Fig. 2b) Besatz dargestellt.

Der Variantenvielfalt stehen somit viele Möglichkeiten offen.

An dieser Stelle haben wir aber immer noch ein Gemisch aus EPS und den mineralischen Bestandteilen und sonstigen Stoffen, die über einen Siebkorb noch gemeinsam ausgeschieden werden und in der Position 5, Fig. 1 separiert und getrennt werden.

Vor der Position 5 befinden sich die elastischen EPS Teilchen und die abgetrennten mineralischen Bestandteile in Sandform und bilden damit eine eigentlich unverwertbare Mischung.

Position 5: Trenneinrichtung:
Die Trenneinrichtung 2 weist eine Schleuderscheibe 6 auf, die in einem Gehäuse 9 angeordnet ist. Hier werden Massenteilchen weggeschleudert, ähnlich beim Winterdienst der Streufahrzeuge, die Auftausalze streuen. Für EPS kommt die Schleuderscheibe 6 hier in Einsatz - aber mit dem Unterschied, dass ein Unterdruck dafür sorgt, dass das EPS nicht über das Spaltmaß "X" gemäß Fig. 1 und Fig. 2 mit den anderen Stoffen durch die Öffnungen 11 absinken kann. Das EPS mit seiner Dichte ca. 0,03 g/cm³ schwebt auf der Schleuderscheibe 6, wobei alle anderen Stoffe über die Zentrifugalkraft nach außen geschleudert werden und an der Innenwandung 10 des Gehäuses 9 durch die Öffnungen 11 absinken. Diese Stoffströme haben alle eine höhere Dichte und sind über die entstehenden Zentrifugalkräfte voneinander mit dieser Einrichtung trennbar. Gleichzeitig strömt atmosphärische Luft durch einen Ansaugkanal 16 mittig unter die Schleuderscheibe 6 und durchströmt das veränderbare Spaltmaß "x" und trägt das EPS. Dabei ist es so, dass das EPS oberhalb der Schleuderscheibe 6 in Schwebe gehalten wird.
- Gleichzeitig sorgt eine tangential eingebaute Turbinenschnecke für eine kontinuierliche Abschöpfung des Styropor Anhaftungen aus Klebern und/oder Putzen und/oder PU Schäumen und/oder festen Farben abplatzen, wobei die perlige und zellige Struktur des Expandierbarem Polystyrol erhalten bleibt,

Kuchens oberhalb der Schleuderscheibe 6 und übernimmt den Abtransport. Schwere Stoffe sinken an der Innenwandung 10 des Gehäuses 9 durch die Öffnungen 11 zu Boden und werden über eine Schnecke 27 in einen Container 28 ausgetragen. Die Schleuderscheibe 6 wird durch eine Antriebswelle 26 angetrieben.

Das Produkt kann dann über Fördereinrichtungen Position 7, Entstaubung Position 6, Zwischensilo und Hauptsilo Position 8 den Produktionsweg antreten.

Die Erfindung ist nicht beschränkt auf die hier dargestellten Ausführungsbeispiele. Vielmehr ist es möglich, durch Variation und Kombination der genannten Merkmale weitere Ausführungsvarianten zu realisieren, ohne den Rahmen der Erfindung zu verlassen..

## Patentansprüche

1. Verfahren zur Aufbereitung von gebrauchtem Material aus Expandierbarem Polystyrol mit Anhaftungen umfassend die folgenden Verfahrensschritte
- Verformung der elastischen Partikel aus Expandierbarem Polystyrol in einer Dekontaminierungsanlage (1) derart, dass die Anhaftungen aus Klebern und/oder Putzen und/oder PU Schäumen und/oder festen Farben abplatzen, wobei die perlige und zellige Struktur des Expandierbarem Polystyrol erhalten bleibt,
- Trennung des aus Anhaftungen und Partikeln aus Expandierbarem Polystyrol bestehenden Stoffgemisches durch Dichtetrennung in einer Trenneinrichtung (2), **dadurch gekennzeichnet, dass** die Dichtetrennung durch mittels einer rotierenden Schleuderscheibe (6) erzeugte Zentrifugalkraft erfolgt.

2. Verfahren nach Anspruch 1, **dadurch gekennzeichnet, dass** dem Verfahrensschritt der Verformung eine mechanische Zerkleinerung des Materials aus Expandierbarem Polystyrol vorgelagert ist.

3. Verfahren nach Anspruch 2, **dadurch gekennzeichnet, dass** die Zerkleinerung in der Größenordnung 0 - 50 mm erfolgt.

4. Verfahren nach Anspruch 1, **dadurch gekennzeichnet, dass** die Verformung durch Stauchung und/oder Pressung der Partikel aus Expandierbarem Polystyrol realisiert wird, indem die Partikel aus Expandierbarem Polystyrol mittels eines Rotors (3) gegen die Geometrie eines Stators (4) geschleudert werden.

5. Verfahren nach Anspruch 1, **dadurch gekennzeichnet, dass** die von den Anhaftungen befreiten Partikel aus Expandierbarem Polystyrol oberhalb der Schleuderscheibe (6) abgesaugt werden und die Anhaftungen in Richtung unterhalb der Schleuderscheibe (6) absinken.

6. Vorrichtung zur Aufbereitung von gebrauchtem Material aus Expandierbarem Polystyrol, wobei die Vorrichtung geeignet ist zur Durchführung des Verfahrens nach Anspruch 1, **dadurch gekennzeichnet, dass** eine Dekontaminierungsanlage (1) mit einer Trenneinrichtung (2) verbunden ist, wobei die Dekontaminierungsanlage (1) einen Rotor (3) mit einem Antrieb und einen Stator (4) mit Gehäuse und mit einer Geometrie (5) aufweist, gegen welche die Partikel aus Expandierbarem Polystyrol geschleudert werden, und die Trenneinrichtung (2) eine in einem Gehäuse (9) angeordnete Schleuderscheibe (6) umfasst, oberhalb derer eine Zuführung (7) für das Material aus Expandierbarem Polystyrol mit Anhaftungen und eine Abführung (8) für das von den Anhaftungen befreite Material aus Expandierbarem Polystyrol angeordnet ist und zwischen der Innenwandung (10) des Gehäuses (9) und der Schleuderscheibe (6) Öffnungen (11) angeordnet sind, durch welche die Anhaftungen absinken.

7. Vorrichtung nach Anspruch 6, **dadurch gekennzeichnet, dass** unterhalb der Schleuderscheibe (6) eine Zuführung (12) für atmosphärische Zuluft angeordnet ist.

8. Vorrichtung nach Anspruch 6, **dadurch gekennzeichnet, dass** der Rotor (3) Rotorscheiben (3a, 3b, 3n) aufweist, an denen Schlegel (13) mit Hartmetall (14) angeordnet sind.

9. Vorrichtung nach Anspruch 6, **dadurch gekennzeichnet, dass** die Geometrie (5) bogenförmige Vertiefungen (17) mit nach innen gerichteten schiefen Ebenen (15) aufweist.

## Claims

1. A method for reclaiming used expandable polystyrene material with adhesions, including the following steps:
- deforming the elastic particles of expandable polystyrene in a decontamination plant (1) such that the adhesions of glues and/or plasters and/or PU foams and/or solid paints chip off, wherein the pearly and cellular structure of the expandable polystyrene remains, and
- separating the mixture of substances consisting of adhesions and particles of expandable polystyrene by density separation in a separation device (2), **characterized in that** the density separation is performed by centrifugal force generated by means of a rotating centrifugal disk (6).

2. The method according to claim 1, **characterized in that** the step of deforming is preceded by a mechanical shredding of the expandable polystyrene material.

3. The method according to claim 2, **characterized in that** the shredding is performed to a size in the order of 0 to 50 mm.

4. The method according to claim 1, **characterized in that** the deforming is realized by upsetting and/or compressing the particles of expandable polystyrene by centrifuging the particles of expandable polystyrene against the geometry of a stator (4) by means of a rotor (3).

5. The method according to claim 1, **characterized in that** the particles of expandable polystyrene freed from adhesions are suctioned off above the centrifugal disk (6) and the adhesions settle toward underneath the centrifugal disk (6).

6. An apparatus for reclaiming used expandable polystyrene material, wherein the apparatus is suitable for performing the method according to claim 1, **characterized in that** a decontamination plant (1) is connected to a separation device (2), wherein the decontamination plant (1) has a rotor (3) with a drive and has a stator (4) with a housing and a geometry (5) against which the particles of expandable polystyrene are centrifuged, the separation device (2) comprises a centrifugal disk (6) arranged in a housing (9), a feed inlet (7) for the expandable polystyrene material with adhesions and an outlet (8) for the expandable polystyrene material freed from the adhesions are arranged above the centrifugal disk (6), and openings (11) through which the adhesions settle are arranged between the inner wall (10) of the housing (9) and the centrifugal disk (6).

7. The apparatus according to claim 6, **characterized in that** an inlet (12) for atmospheric supply air is arranged below the centrifugal disk (6).

8. The apparatus according to claim 6, **characterized in that** the rotor (3) has rotor disks (3a, 3b, 3n) on which mallets (13) with hard metal (14) are arranged.

9. The apparatus according to claim 6, **characterized in that** the geometry (5) has arc-shaped depressions (17) with inwardly directed oblique planes (15)

## Revendications

1. Procédé de traitement de matériau usagé en polystyrène expansé avec des résidus comprenant les étapes de procédé suivantes :
- Transformation des particules élastiques de polystyrène expansé dans une installation de décontamination (1) de telle sorte que les adhérences de colles, d'enduits, de mousses PU et/ou de peintures solides se détachent tout en préservant la structure perlée et cellulaire du polystyrène expansé,
- Séparation du mélange de substances constitué d'adhérences et de particules de polystyrène expansé par densification dans un dispositif de séparation (2), **caractérisée en ce que** la séparation par densification est effectuée par la force centrifuge générée par un disque centrifuge rotatif (6).

2. Procédé selon la revendication 1, **caractérisé en ce que** l'étape de transformation est précédée d'un broyage mécanique du matériau en polystyrène expansé.

3. Procédé selon la revendication 2, **caractérisé en ce que** le broyage est réalisé dans une plage de 0 à 50 mm.

4. Procédé selon la revendication 1, **caractérisé en ce que** la déformation est réalisée par écrasement et/ou pressage des particules de polystyrène expansé, les particules de polystyrène expansé étant projetées contre la géométrie d'un stator (4) à l'aide d'un rotor (3).

5. Procédé selon la revendication 1, **caractérisé en ce que** les particules de polystyrène expansé, libérées des adhérences, sont aspirées au-dessus du disque centrifuge (6), tandis que les adhérences sont déposées en dessous du disque centrifuge (6).

6. Dispositif de traitement de matériau usagé en polystyrène expansé, ledit dispositif étant adapté pour exécuter le procédé selon la revendication 1, **caractérisé en ce qu'**il comprend une installation de décontamination (1) reliée à un dispositif de séparation (2), ladite installation de décontamination (1) comprenant un rotor (3) muni d'un entraînement et un stator (4) avec un boîtier et une géométrie (5) contre laquelle les particules de polystyrène expansé sont projetées, et ledit dispositif de séparation (2) comprenant un disque centrifuge disposé dans un boîtier (9), au-dessus duquel se trouvent un dispositif d'alimentation (7) pour le matériau en polystyrène expansé avec des adhérences (8) et un dispositif d'évacuation pour le matériau dépourvu d'adhérences en polystyrène expansé, et des ouvertures (11) disposées entre la paroi intérieure (10) du boîtier et le disque centrifuge (6), à travers lesquelles les adhérences tombent.

7. Dispositif selon la revendication 6, **caractérisé en ce qu'**une alimentation en air atmosphérique (12) est disposée sous le disque centrifuge (6).

8. Dispositif selon la revendication 6, **caractérisé en ce que** le rotor (3) comporte des disques de rotor (3a, 3b, 3n) sur lesquels sont disposés des marteaux (13) avec des pointes en carbure de tungstène (14).

9. Dispositif selon la revendication 6, **caractérisé en ce que** la géométrie (5) présente des cavités courbées (17) avec des plans inclinés vers l'intérieur (15).
